# FASCICULE DE BREVET EUROPEEN

(11) **EP 3 234 263 B1**
(45) Date de publication et mention de la délivrance du brevet: **13.02.2019**
(21) Numéro de dépôt: 15817794.9
(22) Date de dépôt: 16.12.2015
(51) Int. Cl.: B63B 35/03, E21B 41/00, E21B 43/01, F16L 1/16, F16L 1/18, F16L 1/20, F16L 3/18, E02D 27/52

(54) **PROCÉDÉ DE MISE EN PLACE D'UNE INSTALLATION SOUS-MARINE COMPORTANT AU MOINS UN TRONÇON DE CONDUITE, ET INSTALLATION ASSOCIÉE**
VERFAHREN ZUR MONTAGE EINER UNTERWASSERINSTALLATION MIT MINDESTENS EINEM ROHRABSCHNITT UND ZUGEHÖRIGE INSTALLATION
METHOD FOR MOUNTING AN UNDERSEA INSTALLATION COMPRISING AT LEAST ONE SECTION OF PIPE, AND ASSOCIATED INSTALLATION

(30) Priorité: 16.12.2014 FR 1462498
(43) Date de publication de la demande: 25.10.2017
(73) Titulaire: Technip France, 92400 Courbevoie (FR)
(72) Inventeur: ROUTEAU, Sylvain, 92210 Saint Cloud (FR)
(74) Mandataire: Lavoix
(86) Numéro de dépôt international: PCT/EP2015/080007
(87) Numéro de publication internationale: WO 2016/096994

(56) Documents cités:
- FR-A1- 3 003 622
- US-A1- 2012 263 541

## Description

La présente invention concerne un procédé de mise en place d'une installation sous-marine selon le préambule de la revendication 1.

Ce procédé est destiné à la mise en place d'installations comprenant notamment une conduite de transport de fluide et une structure en ligne déployée le long de la conduite.

On appelle « structure en ligne », les structures ou équipements qui sont attachés ou connectés à au moins un tronçon de conduite de manière à former un ensemble solidaire qui est installé ensemble par un navire de pose. La structure en ligne est le plus souvent raccordée à la conduite à bord du navire de pose et est ensuite déposée en ligne au fur et à mesure de l'installation de la conduite.

La conduite de transport de fluide est de préférence une conduite rigide réalisée à partir d'un assemblage de tubes métalliques et est destinée à l'exploitation sous-marine des hydrocarbures.

Dans les installations sous-marines, il est connu de déployer, le long de la conduite, des structures en ligne comportant des fonctionnalités de raccordement ou de contrôle de débit, tels que des vannes, des têtes de puits, des raccordements en T, etc.

Ces structures en ligne sont par exemple des structures terminales de conduite (« pipeline end termination » ou « PLET » ; « flow line terminal assembly » ou « FTA »), des raccords en T en ligne (« inline tee » ou « ILT » ; « inline tee assembly » ou « ITA »).

Les structures en ligne sont parfois volumineuses et lourdes. Par ailleurs, dans certains cas, les sols sur lesquels l'installation est déposée sont meubles et instables.

Pour assurer un bon positionnement de l'installation, il est alors nécessaire de poser préalablement une fondation sur le fond de l'étendue d'eau, puis de déposer la structure en ligne, et les tronçons de conduite raccordés à la structure en ligne sur la fondation par une technique de pose classique, par exemple en J ou en S ou par la technique dite du rigide déroulée, bien connue de l'homme de l'art.

Dans le cas d'une conduite rigide, le positionnement de la structure en ligne sur la fondation peut s'avérer fastidieux. Il est en effet nécessaire de viser la fondation lors de la descente de la structure en ligne pour s'assurer que la structure en ligne repose bien sur la fondation.

La structure en ligne, et les tronçons de conduite rigide raccordés à la structure en ligne peuvent alors être posés sans guidage, en étant libres de se déplacer.

De plus, des mouvements incontrôlés de la structure en ligne peuvent se produire pendant l'exploitation du champ, en raison des contraintes thermiques appliquées à la conduite, pouvant la déplacer à l'écart de la fondation.

Une telle solution est souvent difficilement réalisable en pratique ou créée des surcoûts pour le projet d'installation. En effet, une telle mise en place nécessite alors d'augmenter les dimensions de la fondation pour pallier aux aléas de la mise en place.

Pour pallier ce problème, des guides permanents sont installés sur la fondation, avant la disposition de la conduite rigide et de la structure en ligne sur celle-ci. Ces guides définissent un axe de positionnement de la conduite rigide sur la fondation.

Une telle solution ne donne pas entière satisfaction, puisqu'elle requiert l'alignement très précis de la conduite avec l'axe de positionnement lors de la pose de la structure, afin d'insérer le ou les tronçons de conduite dans les guides. Ceci complique notablement les opérations de pose.

De plus, la pose peut engendrer des contraintes nouvelles qui s'appliquent sur les tronçons de conduite, créant par exemple des torsions pouvant s'avérer néfastes à la durée de vie de la conduite.

FR 3 003 622 décrit une installation sous-marine comprenant des supports destinés à être déposés sur le fond de l'étendue d'eau et une conduite flexible. L'installation comporte des guides constitués par un rail propre à bloquer latéralement la conduite par rapport au support, tout en autorisant un déplacement longitudinal de la conduite.

Un but de l'invention est donc d'obtenir un procédé de mise en place d'une installation sous-marine qui assure un bon support de l'installation, même dans un sol meuble, et qui reste néanmoins simple à mettre en oeuvre.

A cet effet, l'invention a pour objet un procédé selon la revendication 1..

Suivant des modes particuliers de réalisation, le procédé selon l'invention comprend l'une ou plusieurs des caractéristiques des revendications 2 à 9, prise(s) isolément ou suivant toute combinaison techniquement possible.

L'invention a également pour objet une installation sous-marine selon la revendication 10.

Suivant des modes particuliers de réalisation, l'installation selon l'invention comprend l'une ou plusieurs des caractéristiques selon les revendications 11 à 15, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est une vue schématique de côté d'une première installation selon l'invention lors d'une étape de descente de la structure en ligne et de la conduite rigide sur laquelle est montée la structure en ligne ;
- la figure 2 est une vue de côté de l'installation selon l'invention, lors d'une étape de pose de la structure en ligne et de la conduite sur une fondation au fond de l'étendue d'eau ;
- la figure 3 est une vue de face de l'installation lors de l'étape de pose ;
- la figure 4 est une vue de dessus de l'installation, lors de l'étape de pose ;
- la figure 5 est une vue analogue à la figure 3, lors d'une étape de mise en place d'un guide ;
- la figure 6 est une vue analogue à la figure 4, lors de l'étape de mise en place d'un guide ;
- la figure 7 est une vue en perspective de trois-quarts face d'une variante de guide pour une deuxième installation selon l'invention ;
- la figure 8 est une vue analogue à la figure 6 de la deuxième installation selon l'invention ;
- la figure 9 est une vue analogue à la figure 3 d'une troisième installation selon l'invention ; et
- la figure 10 est une vue partielle en perspective d'une quatrième installation selon l'invention.

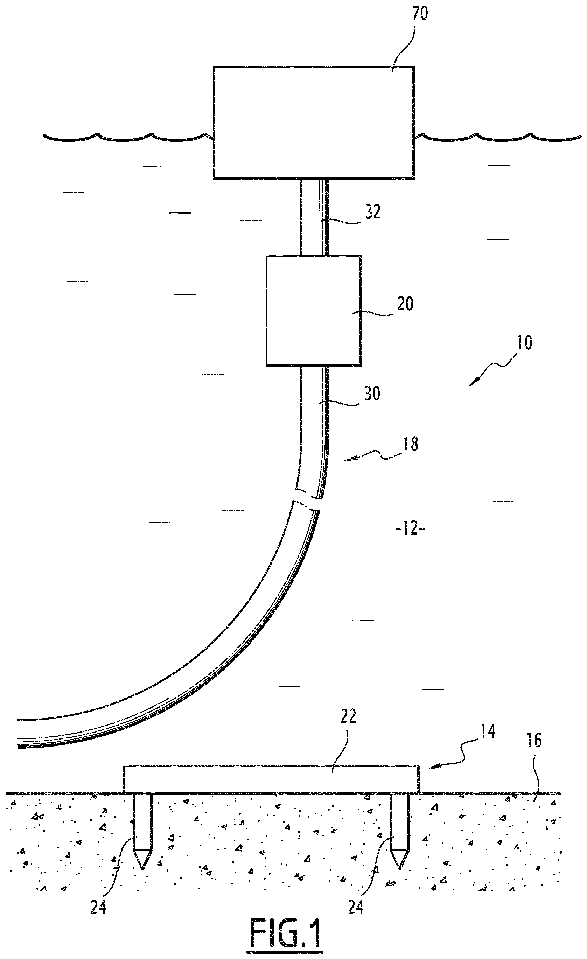

Une première installation 10 sous-marine selon l'invention est illustrée successivement par les figures 1 à 6.

Cette installation 10 est destinée notamment à collecter et à convoyer un fluide au fond d'une étendue d'eau 12, par exemple en vue de sa remontée vers la surface. Le fluide est notamment un fluide contenant des hydrocarbures, tel que du pétrole ou du gaz naturel.

L'étendue d'eau 12 est par exemple une mer, un océan, un lac, ou une rivière. La profondeur de l'étendue d'eau 12 au droit de l'installation 10 est par exemple comprise entre 5 m et 3000 m et même au-delà.

L'installation 10 comporte une fondation 14, posée sur le fond 16 de l'étendue d'eau 12, au moins une conduite 18 de transport de fluide, et avantageusement, au moins une structure en ligne 20 portée par la conduite 18 et destinée à reposer sur la fondation 14.

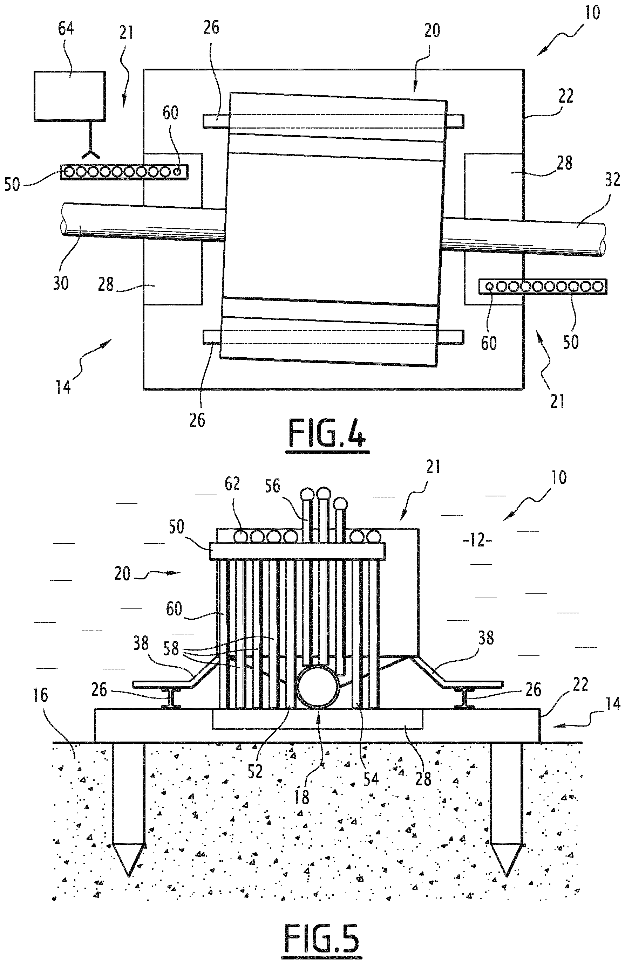

Selon l'invention, l'installation 10 comporte au moins un guide 21, visible par exemple sur la figure 5, propre à bloquer latéralement un tronçon de conduite 18 par rapport à la fondation 14, tout en autorisant un déplacement longitudinal du tronçon de conduite dans le guide 21.

Selon l'invention, chaque guide 21 est propre à être mis en place après l'amenée et la pose de la conduite 18 et de la structure 20 sur la fondation 14.

La fondation 14 est destinée à porter et à stabiliser au moins une partie de la conduite 18, et de la structure en ligne 20, notamment lorsque le fond 16 de l'étendue d'eau 12 est instable ou/et meuble.

La fondation 14 comporte un plateau 22 de support, destiné à s'étendre au moins partiellement au-dessus du fond 16 de l'étendue d'eau 12. Elle comporte avantageusement des jambes 24 d'ancrage dans le fond 16 de l'étendue d'eau 12. Elle comporte ici des poutres longitudinales 26 d'appui de la structure en ligne 20, et des traverses transversales 28 de support de tronçons de la conduite 18.

Les jambes d'ancrage 24 font saillie à partir du plateau 22 dans le fond 16 de l'étendue d'eau 12.

Les poutres 26 s'étendent ici parallèlement à un axe A-A' de la fondation 14, de part et d'autre de cet axe A-A'. Les traverses 28 s'étendent perpendiculairement à l'axe A-A', au voisinage des extrémités longitudinales de la fondation 14.

La conduite 18 est une conduite rigide. Elle est formée d'un assemblage de tubes métalliques. Les tubes sont assemblés par exemple par soudure en surface, avant la descente de la conduite 18 dans l'étendue d'eau 12.

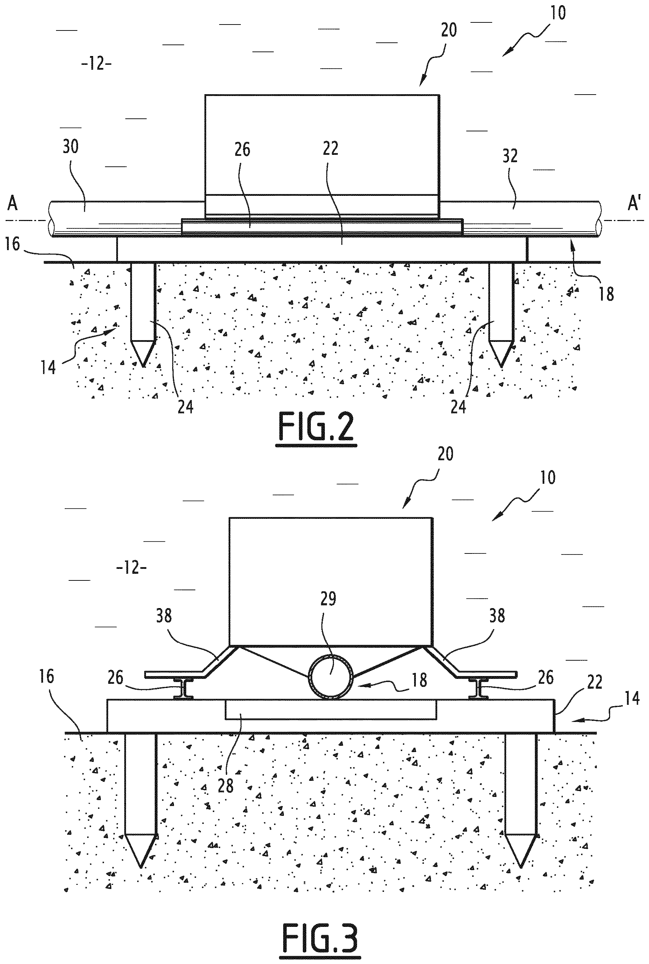

La conduite 18 définit intérieurement un passage 29 de circulation de fluide, visible sur la figure 3.

Dans cet exemple, la conduite 18 comporte au moins un premier tronçon 30 faisant saillie longitudinalement d'un premier côté de la structure en ligne 20, et avantageusement, au moins un deuxième tronçon 32 faisant saillie longitudinalement d'un deuxième côté de la structure en ligne 20 à l'opposé du premier tronçon 30, au moins un desdits tronçons étant raccordés à la structure en ligne 20 lors de la pose..

Selon l'invention, la structure 20 peut être une structure terminale de conduite ou « PLET » (Pipe Line End Termination) c'est-à-dire un équipement relié à la conduite 18 uniquement d'un côté par un seul tronçon 28 et donc posé en ligne en extrémité de conduite.

Dans l'exemple visible sur les figures, la structure 20 est connectée en ligne à la conduite 18 par l'intermédiaire des deux tronçons 30, 32.

Le premier tronçon 30 est destiné à venir en appui sur une première traverse 28 et le deuxième tronçon 32 est destiné à venir en appui sur une deuxième traverse 28.

La structure en ligne 20 est par exemple choisie parmi une structure terminale de conduite (« pipeline end termination » ou « PLET » ; « flow line terminal assembly » ou « FTA »), un raccord en T en ligne (« inline tee » ou « ILT » ; « inline tee assembly » ou « ITA »).

Elle comporte par exemple des éléments fonctionnels, tels que des conduits, des organes de contrôle du débit, notamment des vannes, des collecteurs de fluide, des équipements terminaux, des raccords d'injection de gaz d'élévation (« gas lift » en anglais). Une structure en ligne 20 n'est pas un simple tronçon de conduite.

Dans l'exemple représenté sur la figure 3, la structure en ligne 20 comporte une armature 36 portant les éléments fonctionnels, des pieds 38 d'appui sur la fondation 14, destinés à être posés sur les poutres 26.

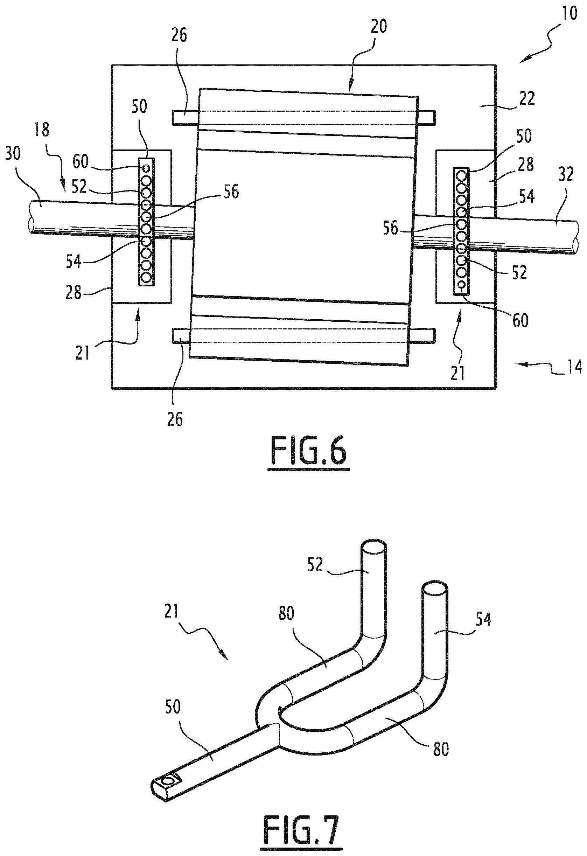

Comme illustré par la figure 4 et par la figure 6, l'installation 10 comporte au moins un premier guide 21 destiné au guidage du premier tronçon 30. Elle peut également comporter un guide additionnel 21 destinée au guidage du deuxième tronçon 32.

Les guides 21 sont disposés de part et d'autre de la fondation 14 au voisinage de ses extrémités longitudinales.

En référence à la figure 5, chaque guide 21 comporte un support 50, et une pluralité de butées mobiles, comprenant une première butée latérale 52, destinée à caler un premier côté du tronçon 30, 32, et une deuxième butée latérale 54, destinée à caler un deuxième côté du tronçon 30, 32.

Dans l'exemple représenté sur la figure 5, chaque guide 21 comporte en outre au moins une butée intermédiaire 56, disposée entre les butées 52, 54 et destinée à s'appuyer sur une surface supérieure du tronçon 30, 32.

Le guide 21 comporte plus généralement une pluralité de butées 58 parallèles, espacées transversalement par rapport à l'axe A-A'. Les butées 52 à 58 forment un peigne, destiné à accommoder diverses positions transversales du tronçon 30, 32 par rapport à l'axe A-A'.

La distance séparant latéralement deux butées 52 à 58 adjacentes est par exemple comprise entre 20 mm et 80 mm.

Dans cet exemple, le guide 21 comporte en outre un mécanisme 60 de déplacement conjoint du support 50 et des butées 52 à 58, entre une position escamotée de mise en place de la conduite 18, visible sur la figure 4, et une position active de calage d'un tronçon 30, 32, visible sur la figure 6.

Le guide 21 comporte en outre un mécanisme (non représenté) de blocage en position de chaque butée 52 à 58.

Le support 50 s'étend au-dessus de la traverse 28, sensiblement parallèlement à une surface supérieure de la traverse 28 sur laquelle s'appuie le tronçon 30, 32, dans la position active.

Les butées 52, 54, 56, 58 sont montées mobiles en translation verticale dans le support 50, entre une position supérieure de mise en place du tronçon 30, 32, et une position inférieure d'insertion dans la traverse 28.

Dans la position supérieure, l'extrémité inférieure de la butée 52 à 58 est disposée au-dessus et à l'écart de la traverse 28, à une distance au moins supérieure au diamètre du tronçon 30, 32.

Dans la position inférieure, l'extrémité inférieure de la butée 52 à 58 est insérée dans un orifice ménagé dans la traverse 28.

Chaque butée 52 à 58 est munie d'un organe de manoeuvre 62, propre à être saisi par un plongeur ou par un véhicule télécommandé 64 («Remotely Operated Vehicle » ou ROV en anglais). L'organe de manoeuvre 62 est par exemple formé par une boucle de corde (ou « monkey fist »).

Le mécanisme de blocage est propre à bloquer chaque butée 52 à 58 dans sa position supérieure et à être libéré par un plongeur ou par le véhicule télécommandé 64.

Dans l'exemple représenté sur la figure 4, le mécanisme de déplacement 60 est propre à faire pivoter le support 50 et des butées 52 à 58 autour d'un axe vertical par rapport à la fondation 14, entre la position escamotée, dans laquelle le support 50 s'étend sensiblement axialement par rapport à l'axe A-A', et la position active dans laquelle le support 50 s'étend sensiblement transversalement par rapport à l'axe A-A'.

Le procédé de mise en place de l'installation 10 selon l'invention va maintenant être décrit. Ce procédé est mis en oeuvre à l'aide d'un ensemble de pose 70, visible sur la figure 1.

L'ensemble de pose 70 est disposé à la surface de l'étendue d'eau. Il est de préférence flottant. Il comporte par exemple des moyens de pose classiques en J ou en S.

Initialement, la fondation 14 est fournie et est mise en place sur le fond 16 de l'étendue d'eau 12. Les jambes 24 sont fixées dans le fond 16 de l'étendue d'eau 12. Le plateau 22 s'étend avantageusement au-dessus du fond 16.

Les guides 21 sont disposés dans la position escamotée. Les butées 52 à 58 occupent leur position supérieure et sont maintenues en position par le mécanisme de blocage.

L'ensemble de pose 70 descend progressivement un premier tronçon 30 de la conduite 18.

Puis, la structure en ligne 20 est assemblée sur la conduite 18 en surface. La structure en ligne 20 est descendue dans l'étendue d'eau 12 en étant suspendue à un deuxième tronçon 32 de la conduite 18.

Les tronçons 30, 32 et la structure en ligne 20 sont alors placés sur la fondation 14 avec des tolérances de positionnement très larges.

En particulier, les tronçons 30, 32 de conduite 18 et la structure en ligne 20 sont déposés librement sur la fondation 14, dans la position et l'orientation naturelle qu'ils occupent à la fin de leur descente. Ils s'orientent angulairement et transversalement de manière libre par rapport à l'axe A-A' de la fondation 14.

Aucun guide n'est en place lors de l'appui des tronçons 30, 32 ou/et de la structure en ligne 20 sur la fondation 14.

Ce positionnement de la conduite 18 et de la structure en ligne 20 est donc simple à réaliser depuis la surface, puisqu'il suffit juste de viser un appui sur la fondation 14, sans avoir à obtenir une orientation très précise des tronçons 30, 32 ou/et de la structure en ligne 20 par rapport à l'axe A-A' de la fondation 14.

Ensuite, une fois la structure en ligne 20 et la conduite 18 posées en appui stable sur la fondation 14, chaque guide 21 est manoeuvré par un plongeur ou par un véhicule télécommandé 64 pour le placer dans la position active.

Comme illustré par la figure 6, le support 50 s'oriente alors sensiblement transversalement par rapport au tronçon 30, 32.

Puis, la première butée 52 située la plus proche d'un premier côté du tronçon 30, 32 est déplacée de sa position supérieure à sa position inférieure pour caler le premier côté du tronçon 30, 32 dans l'orientation angulaire qu'il occupe suite à la pose du tronçon 30, 32 sur la fondation 14.

De même, la deuxième butée 54 située la plus proche d'un deuxième côté du tronçon 30, 32 est déplacée de sa position supérieure à sa position inférieure pour caler le deuxième côté du tronçon 30, 32 dans la même orientation angulaire.

Aucun déplacement ou aucune mise en contrainte du tronçon 30, 32 n'est nécessaire pour caler latéralement en position le tronçon 30, 32, quel que soit son orientation angulaire. Ceci assure le maintien de la position de la conduite 18, avec une mise en place très simple.

Avantageusement, la configuration angulaire locale du tronçon de conduite 30, 32 par rapport à un axe A-A' de la fondation 14 après la mise en place du guide 21 correspond à la configuration angulaire locale du tronçon de conduite 30, 32 avant la mise en place du guide 21.

Par ailleurs, les tronçons 30, 32 de la conduite restent libres de se déplacer en translation entre les butées 52, 54 pour permettre un ajustement potentiel de position et le relâchement éventuel de contraintes préexistantes.

La butée intermédiaire 56 est également descendue vers sa position inférieure, et s'appuie dans une position intermédiaire contre la surface supérieure du tronçon 30, 32.

Puis, les autres butées 58 sont descendues dans leur position inférieure.

Le procédé de mise en place donc particulièrement simple à mettre en oeuvre, puisqu'il ne se nécessite pas un guidage précis de l'ensemble formé par la conduite 18 et par la structure en ligne 20 sur la fondation 14.

Néanmoins, le procédé de mise en place assure un calage latéral très efficace des tronçons 30, 32 de la conduite 18 en laissant la possibilité d'un déplacement axial.
Dans une variante, au moins un tronçon 30, 32 est équipé d'une coiffe de protection propre à entrer en contact avec la butée intermédiaire 56 pour protéger la surface extérieure de la conduite 18.

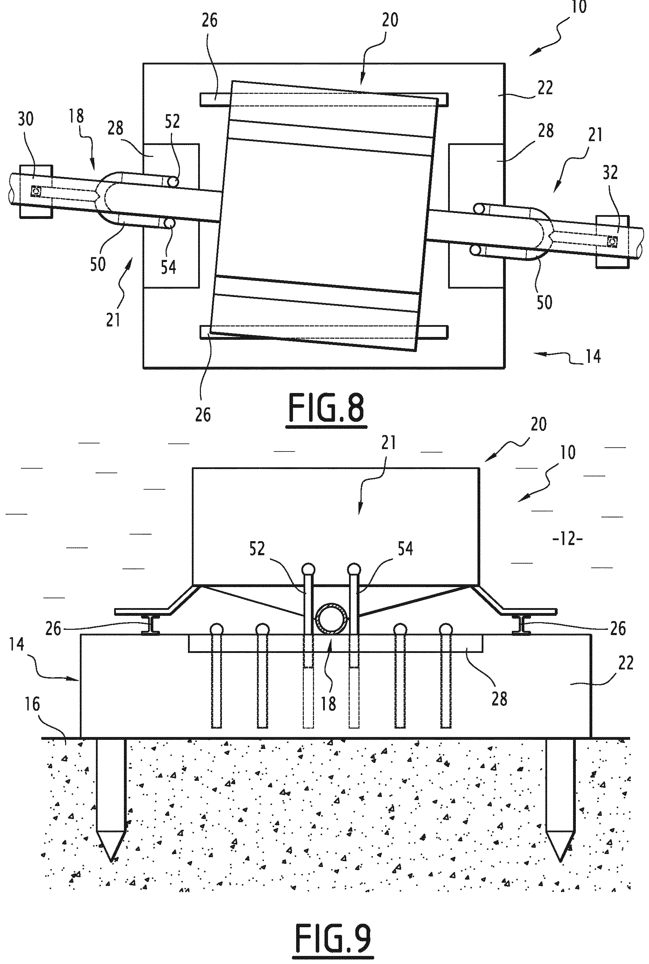

Dans la variante représentée sur les figures 7 et 8, chaque guide 21 comporte un support 50 en forme de fourche présentant deux doigts 80 parallèles portant respectivement une butée 52, 54.

Les supports 50 sont montés pivotants au moins autour d'un axe vertical par rapport à la fondation 14.

Chaque guide 21 comporte un mécanisme de blocage en position du support 50, activable après la mise en place du tronçon 30, 32.

Le procédé de mise en place de l'installation 10 représentée sur la figure 8 diffère de celui représenté sur les figures 1 à 6 en ce que les supports 50 sont initialement escamotés. Ils sont ensuite mis en place sous chaque tronçon 30, 32, après la pose de la conduite 18 et de la structure en ligne sur la fondation 14, pour caler le tronçon 30, 32 dans l'orientation angulaire qu'il occupe, en disposant les butées 52, 54 de part et d'autre du tronçon 30, 32.

Puis, les supports 50 sont bloqués angulairement par le mécanisme de blocage.

Selon une variante de l'invention, le peigne est situé dans sa position escamotée à l'intérieur de la fondation 14 de manière à faire saillie en dessous du plan de la fondation sur laquelle vient prendre appui la structure 20. Selon cette variante, les butées 52, à 54 sont alors tirées vers le haut par un mécanisme commandé manuellement (plongeur) ou de manière automatique par un engin commandé de type ROV, AUV à l'exception des butées qui sont bloquées en translation par le tronçon de conduite 32, 34. De ce fait les butées latérales 52 et 54 viennent se mettre en place autour du tronçon de conduite.

Dans la variante représentée sur la figure 9, le guide 21 est dépourvu de support 50. Les butées 52 à 58 sont initialement dans une position inférieure escamotée dans la fondation 14 par exemple à travers la traverse 28.

La conduite 18 est déposée sur la fondation 14, comme indiqué précédemment, en lui laissant adopter la configuration souhaitée.

Puis, une première butée latérale 52 située la plus proche d'un premier côté de chaque tronçon 30, 32 est relevée dans une position supérieure déployée. Une deuxième butée latérale 54 située la plus proche d'un deuxième côté du tronçon 30, 32 est également relevée dans une position supérieure déployée.

Chaque tronçon 30, 32 est alors calé latéralement entre les butées latérales 52, 54.

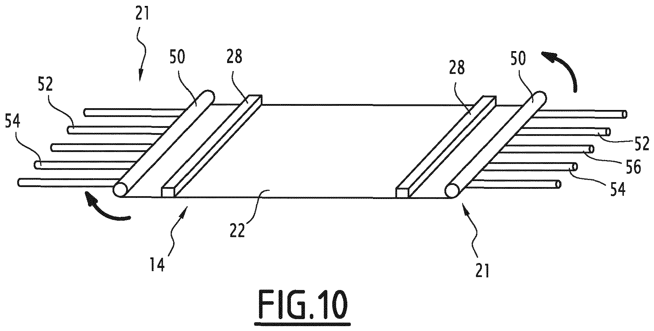

Dans une variante représentée sur la figure 10, le mouvement du support 50 des butées 52 à 54 s'effectue suivant une rotation d'un quart de tour autour d'un axe horizontal, entre une position aplatie visible sur la figure 10, dans laquelle les butées 52 à 54 sont aplaties et une position en saillie verticale dans laquelle au moins deux butées 52, 54 font saillie verticalement. Chaque extrémité de la fondation 14 est avantageusement munie d'un peigne de butées 52 à 56.

La rotation de 90° du support 50 cale chaque tronçon de conduite respectif 30, 32 entre ses butées 52, 54. Certaines butées 56 restent bloquées dans leur position horizontale par un tronçon de conduite 30, 32 lors de la rotation.

Chaque guide 21 comporte un mécanisme de blocage en position du support 50, activable après la mise en place du tronçon 30, 32.

Le procédé de mise en place de l'installation 10 représentée sur la figure 8 diffère de celui représenté sur les figures 1 à 6 en ce que les supports 50 sont initialement escamotés. Ils sont ensuite mis en place sous chaque tronçon 30, 32, après la pose de la conduite 18 et de la structure en ligne sur la fondation 14, pour caler le tronçon 30, 32 dans l'orientation angulaire qu'il occupe, en disposant les butées 52, 54 de part et d'autre du tronçon 30, 32.

Puis, les supports 50 sont bloqués angulairement par le mécanisme de blocage.

Selon une variante de l'invention, le peigne est situé dans sa position escamotée à l'intérieur de la fondation 14 de manière à faire saillie en dessous du plan de la fondation sur laquelle vient prendre appui la structure 20. Selon cette variante, les butées 52, à 54 sont alors tirées vers le haut par un mécanisme commandé manuellement (plongeur) ou de manière automatique par un engin commandé de type ROV, AUV à l'exception des butées qui sont bloquées en translation par le tronçon de conduite 32, 34. De ce fait les butées latérales 52 et 54 viennent se mettre en place autour du tronçon de conduite.

Dans la variante représentée sur la figure 9, le guide 21 est dépourvu de support 50. Les butées 52 à 58 sont initialement dans une position inférieure escamotée dans la fondation 14 par exemple à travers la traverse 28.

La conduite 18 est déposée sur la fondation 14, comme indiqué précédemment, en lui laissant adopter la configuration souhaitée.

Puis, une première butée latérale 52 située la plus proche d'un premier côté de chaque tronçon 30, 32 est relevée dans une position supérieure déployée. Une deuxième butée latérale 54 située la plus proche d'un deuxième côté du tronçon 30, 32 est également relevée dans une position supérieure déployée.

Chaque tronçon 30, 32 est alors calé latéralement entre les butées latérales 52, 54.

Dans une variante représentée sur la figure 10, le mouvement du support 50 des butées 52 à 54 s'effectue suivant une rotation d'un quart de tour autour d'un axe horizontal, entre une position aplatie visible sur la figure 10, dans laquelle les butées 52 à 54 sont aplaties et une position en saillie verticale dans laquelle au moins deux butées 52, 54 font saillie verticalement. Chaque extrémité de la fondation 14 est avantageusement munie d'un peigne de butées 52 à 56.

La rotation de 90° du support 50 cale chaque tronçon de conduite respectif 30, 32 entre ses butées 52, 54. Certaines butées 56 restent bloquées dans leur position horizontale par un tronçon de conduite 30, 32 lors de la rotation.

## Revendications

1. Procédé de mise en place d'une installation (10) sous-marine comportant au moins une structure en ligne (20) solidaire d'un tronçon de conduite (30, 32), le procédé comprenant les étapes suivantes :
- fourniture d'une fondation (14) sous-marine disposée sur le fond (16) d'une étendue d'eau (12) ;
- pose de la structure en ligne (20) et du tronçon de conduite (30, 32) sur la fondation (14) en laissant la structure en ligne (20) et le tronçon de conduite (30, 32) s'orienter librement sur la fondation (14) ;
**caractérisé en ce que** le procédé comporte ensuite les étapes suivantes :
- mise en place d'au moins un guide (21) sur la fondation (14) de part et d'autre du tronçon de conduite (30, 32) ;
- blocage du guide (21) sur la fondation pour caler latéralement le tronçon de conduite (30, 32) par rapport à la fondation (14), tout en autorisant un déplacement longitudinal du tronçon de conduite (30, 32) par rapport au guide (21).

2. Procédé selon la revendication 1, dans lequel l'étape de mise en place du guide (21) comporte la disposition d'une première butée latérale (52) d'un premier côté du tronçon de conduite (30, 32) et la disposition d'une deuxième butée latérale (54) d'un deuxième côté du tronçon de conduite (30, 32), le tronçon de conduite (30, 32) étant calé latéralement entre la première butée latérale (52) et la deuxième butée latérale (54).

3. Procédé selon la revendication 2, dans lequel l'étape de blocage du guide (21) comporte le verrouillage en position de la première butée latérale (52) et de la deuxième butée latérale (54) par rapport à la fondation (14).

4. Procédé selon l'une quelconque des revendications 2 à 3, dans lequel l'étape de mise en place du guide (21) comporte le calage d'au moins une butée intermédiaire (56) disposée entre la première butée latérale (52) et la deuxième butée latérale (54) sur une surface supérieure d'appui liée au tronçon de conduite (30, 32).

5. Procédé selon la revendication 4, dans lequel le tronçon de conduite (30, 32) porte une coiffe de protection avantageusement cylindrique, la butée intermédiaire (56) étant calée sur la coiffe.

6. Procédé selon l'une quelconque des revendications 2 à 4, dans lequel le guide (21) comporte un support (50) monté sur la fondation (14), chaque butée latérale (52, 54) étant déplacée verticalement dans le support (50) entre une position supérieure de mise en place du tronçon de conduite (30, 32) et une position inférieure de calage du tronçon de conduite (30, 32).

7. Procédé selon l'une quelconque des revendications précédentes, dans lequel la configuration angulaire locale du tronçon de conduite (30, 32) par rapport à un axe (A-A') de la fondation (14) après la mise en place du guide (21) correspond à la configuration angulaire locale du tronçon de conduite (30, 32) avant la mise en place du guide (21).

8. Procédé selon l'une quelconque des revendications précédentes, comprenant, après l'étape de pose du tronçon de conduite (30, 32) sur la fondation (14), la mise en place d'au moins un guide additionnel (21) sur la fondation (14) de part et d'autre du tronçon de conduite (30, 32) et le blocage du guide additionnel (21) pour caler le tronçon de conduite (30, 32) par rapport à la fondation (14), tout en autorisant un déplacement longitudinal du tronçon de conduite (30, 32) par rapport au guide (21), le guide additionnel (21) étant espacé axialement du guide (21) le long de la conduite (18).

9. Procédé selon la revendication 8, dans lequel la structure en ligne (20) s'appuie sur la fondation (14) lors de l'étape de pose du tronçon de conduite (30, 32) sur la fondation (14).

10. Installation (10) sous-marine comportant :
- une fondation (14) sous-marine disposée sur le fond de l'étendue d'eau ;
- au moins un tronçon de conduite (30, 32) et une structure en ligne (20) disposés en regard de la fondation (14) sous-marine ;
**caractérisée en ce que** l'installation (10) comporte au moins un guide (21) monté sur la fondation (14) de part et d'autre du tronçon de conduite (30, 32) pour bloquer latéralement le tronçon de conduite (30, 32) par rapport à la fondation (14), tout en autorisant un déplacement longitudinal du tronçon de conduite (30, 32) par rapport au guide (21), le guide (21) étant propre à être mis en place après la pose du tronçon de conduite (30, 32) sur la fondation (14).

11. Installation (10) selon la revendication 10, dans laquelle le guide (21) comporte une première butée latérale (52) disposée d'un premier côté du tronçon de conduite (30, 32) et une deuxième butée latérale (54) disposée d'un deuxième côté du tronçon de conduite (30, 32), le tronçon de conduite (30, 32) étant calé latéralement entre la première butée latérale (52) et la deuxième butée latérale (54).

12. Installation (10) selon la revendication 11, dans laquelle le guide (21) comporte au moins une butée intermédiaire (56) calée entre la première butée latérale (52) et la deuxième butée latérale (54) sur une surface supérieure d'appui liée au tronçon de conduite (30, 32).

13. Installation (10) selon la revendication 12, dans laquelle le tronçon de conduite (30, 32) porte une coiffe de protection avantageusement cylindrique, la butée intermédiaire (56) étant calée sur la coiffe.

14. Installation (10) selon l'une quelconque des revendications 11 à 13, dans laquelle le guide (21) comporte un support (50) monté sur la fondation (14), chaque butée latérale (52, 54) étant déplaçable verticalement dans le support (50) entre une position supérieure de mise en place du tronçon de conduite (30, 32) et une position inférieure de calage du tronçon de conduite (30, 32).

15. Installation (10) selon l'une quelconque des revendications 10 à 14, dans laquelle la structure en ligne (20) s'appuie sur la fondation (14).

## Patentansprüche

1. Verfahren zum Anbringen einer unterseeischen Einrichtung (10), welche mindestens eine In-Linie-Struktur (20), welche fest mit einem Leitungsabschnitt (30, 32) verbunden ist, aufweist, wobei das Verfahren die folgenden Schritte aufweist:
- Bereitstellen eines unterseeischen Fundaments (14), welches am Grund (16) einer Wasserfläche (12) angeordnet ist,
- Setzen der In-Linie-Struktur (20) und des Leitungsabschnitts (30, 32) auf das Fundament (14) unter Zulassen, dass die In-Linie-Struktur (20) und der Leitungsabschnitt (30, 32) sich frei auf dem Fundament (14) ausrichten,
**gekennzeichnet dadurch, dass** das Verfahren danach die folgenden Schritte aufweist:
- Anbringen von mindestens einer Führung (21) auf dem Fundament (14) auf beiden Seiten des Leitungsabschnitts (30, 32),
- Arretieren der Führung (21) auf dem Fundament zur lateralen Halterung des Leitungsabschnitts (30, 32) bezüglich des Fundaments (14), während eine longitudinale Verschiebung des Leitungsabschnitts (30, 32) bezüglich der Führung (21) zugelassen wird.

2. Verfahren gemäß dem Anspruch 1, wobei der Schritt des Anbringens der Führung (21) das Anordnen eines ersten seitlichen Anschlags (52) an einer ersten Seite des Leitungsabschnitts (30, 32) und das Anordnen eines zweiten seitlichen Anschlags (54) an einer zweiten Seite des Leitungsabschnitts (30, 32) aufweist, wobei der Leitungsabschnitt (30, 32) zwischen dem ersten seitlichen Anschlag (52) und dem zweiten seitlichen Anschlag (54) lateral gehaltert ist.

3. Verfahren gemäß dem Anspruch 2, wobei der Schritt des Arretierens der Führung (21) das Fixieren des ersten seitlichen Anschlags (52) und des zweiten seitlichen Anschlags (54) in Position bezüglich des Fundaments (14) aufweist.

4. Verfahren gemäß irgendeinem der Ansprüche 2 bis 3, wobei der Schritt des Anbringens der Führung (21) das Haltern von mindestens eines Zwischenanschlags (56), welcher zwischen dem ersten seitlichen Anschlags (52) und dem zweiten seitlichen Anschlags (54) angeordnet ist, an einer oberen Auflagefläche, welche mit dem Leitungsabschnitt (30, 32) verbunden ist, aufweist.

5. Verfahren gemäß dem Anspruch 4, wobei der Leitungsabschnitt (30, 32) eine, vorteilhafterweise zylindrische, Schutzabdeckung trägt, wobei der Zwischenanschlag (56) an der Abdeckung gehaltert ist.

6. Verfahren gemäß irgendeinem der Ansprüche 2 bis 4, wobei die Führung (21) eine Abstützung (50), welche auf dem Fundament (14) montiert ist, aufweist, wobei jeder seitliche Anschlag (52, 54) in der Abstützung (50) zwischen einer oberen Position zum Anbringen des Leitungsabschnitts (30, 32) und einer unteren Position zur Halterung des Leitungsabschnitts (30, 32) vertikal verschiebbar ist.

7. Verfahren gemäß irgendeinem der vorangehenden Ansprüche, wobei die lokale Winkelkonfiguration des Leitungsabschnitts (30, 32) in Bezug auf eine Achse (A-A') des Fundaments (14) nach dem Anbringen der Führung (21) einer lokalen Winkelkonfiguration des Leitungsabschnitts (30, 32) vor dem Anbringen der Führung (21) entspricht.

8. Verfahren gemäß irgendeinem der vorangehenden Ansprüche, aufweisend, nach dem Schritt des Setzens des Leitungsabschnitts (30, 32) auf das Fundament (14), das Anbringen von mindestens einer zusätzlichen Führung (21) auf dem Fundament auf beiden Seiten des Leitungsabschnitts (30, 32) und das Arretieren der zusätzlichen Führung (21) zur Halterung des Leitungsabschnitts (30, 32) bezüglich des Fundaments (14), während eine longitudinale Verschiebung des Leitungsabschnitts (30, 32) bezüglich des der Führung (21) zugelassen wird, wobei die zusätzliche Führung (21) axial von Führung (21) entlang der Leitung (18) beabstandet.

9. Verfahren gemäß dem Anspruch 8, wobei, bei dem Schritt des Setzens des Leitungsabschnitts (30, 32) auf das Fundament (14), die In-Linie-Struktur (20) auf dem Fundament (14) aufliegt.

10. Unterseeische Einrichtung (10), aufweisend:
- ein unterseeisches Fundament (14), welches am Grund einer Wasserfläche angeordnet ist,
- mindestens einen Leitungsabschnitt (30, 32) und eine In-Linie-Struktur (20), welche dem unterseeischen Fundament (14) gegenüberliegend angeordnet sind,
- **dadurch gekennzeichnet, dass** die Einrichtung (10) mindestens eine Führung (21) aufweist, welche auf dem Fundament (14) an beiden Seiten des Leitungsabschnitts (30, 32) montiert ist, zum lateralen Arretieren des Leitungsabschnitts (30, 32) bezüglich des Fundaments (14), während eine longitudinale Verschiebung des Leitungsabschnitts (30, 32) bezüglich der Führung (21) zugelassen wird, wobei die Führung (21) dazu geeignet ist, nach dem Setzen des Leitungsabschnitts (30, 32) auf das Fundament (14) angebracht zu werden.

11. Einrichtung (10) gemäß dem Anspruch 10, wobei die Führung (21) einen ersten seitlichen Anschlag (52), welcher an einer ersten Seite des Leitungsabschnitts (30, 32) angeordnet ist, und einen zweiten seitlichen Anschlag (54), welcher an einer zweiten Seite des Leitungsabschnitts (30, 32) angeordnet ist, aufweist, wobei der Leitungsabschnitt (30, 32) zwischen dem ersten seitlichen Anschlag (52) und dem zweiten seitlichen Anschlag (54) lateral gehaltert ist.

12. Einrichtung (10) gemäß dem Anspruch 11, wobei die Führung (21) mindestens einen Zwischenanschlag (56) aufweist, welcher zwischen dem ersten seitlichen Anschlag (52) und dem zweiten seitlichen Anschlag (54) an einer oberen Auflagefläche, welche mit dem Leitungsabschnitt (30, 32) verbunden ist, gehaltert ist.

13. Einrichtung (10) gemäß dem Anspruch 12, wobei der Leitungsabschnitt (30, 32) eine, vorteilhafterweise zylindrische, Schutzabdeckung trägt, wobei der Zwischenanschlag (56) an der Abdeckung gehaltert ist.

14. Einrichtung (10) gemäß irgendeinem der Ansprüche 11 bis 13, wobei die Führung (21) eine Abstützung (50), welche auf dem Fundament (14) montiert ist, aufweist, wobei jeder seitliche Anschlag (52, 54) in der Abstützung (50) zwischen einer oberen Position zum Anbringen des Leitungsabschnitts (30, 32) und einer unteren Position zur Halterung des Leitungsabschnitts (30, 32) vertikal verschiebbar ist.

15. Einrichtung (10) gemäß irgendeinem der Ansprüche 10 bis 14, wobei die In-Linie-Struktur (20) auf dem Fundament (14) aufliegt.

## Claims

1. A method for mounting an undersea installation (10) including at least one in-line structure (20) secured to a section of pipe (30, 32), the method comprising the following steps:
- providing an undersea foundation (14) arranged on the bed (16) of a body of water (12);
- laying the in-line structure (20) and the section of pipe (30, 32) on the foundation (14) while allowing the in-line structure (20) and the section of pipe (30, 32) to freely self-orient on the foundation (14);
**characterized in that** the method next includes the following steps:
- placing at least one guide (21) on the foundation (14) on both sides of the section of pipe (30, 32);
- blocking the guide (21) on the foundation (14) to laterally clamp the section of pipe (30, 32) with respect to the foundation (14), while authorizing a longitudinal movement of the section of pipe (30, 32) with respect to the guide (21).

2. The method according to claim 1, wherein the step for placing the guide (21) includes positioning a first lateral stop (52) on one side of the section of pipe (30, 32) and positioning a second lateral stop (54) on a second side of the section of pipe (30, 32), the section of pipe (30, 32) being laterally clamped between the first lateral stop (52) and the second lateral stop (54).

3. The method according to claim 2, wherein the step for blocking the guide (21) includes locking the first lateral stop (52) and the second lateral stop (54) in position relative to the foundation (14).

4. The method according to any one of claims 2 to 3, wherein the step for placing the guide (21) includes clamping at least one intermediate stop (56) positioned between the first lateral stop (52) and the second lateral stop (54) on an upper bearing surface connected to the section of pipe (30, 32).

5. The method according to claim 4, wherein the section of pipe (30, 32) has a protective cap, advantageously cylindrical, the intermediate stop (56) being clamped on the cap.

6. The method according to any one of claims 2 to 4, wherein the guide (21) includes a support (50) mounted on the foundation (14), each lateral stop (52, 54) being moved vertically in the support (50) between an upper placement position of the section of pipe (30, 32) and a lower clamping position of the section of pipe (30, 32).

7. The method according to any one of the preceding claims, wherein the local angular configuration of the section of pipe (30, 32) relative to an axis (A-A') of the foundation (14) after placement of the guide (21) corresponds to the local angular configuration of the section of pipe (30, 32) before the placement of the guide (21).

8. The method according to any one of the preceding claims, comprising, after the step for placing the section of pipe (30, 32) on the foundation (14), placing at least one additional guide (21) on the foundation (14) on either side of the section of pipe (30, 32) and blocking the additional guide (21) to clamp the section of pipe (30, 32) relative to the foundation (14), while allowing a longitudinal movement of the section of pipe (30, 32) relative to the guide (21), the additional guide (21) being spaced axially away from the guide (21) along the pipe (18).

9. The method according to claim 8, wherein the in-line structure (20) bears on the foundation (14) during the placement step of the section of pipe (30, 32) on the foundation (14).

10. An undersea installation (10) comprising:
- an undersea foundation (14) arranged on the bed of a body of water;
- at least one section of pipe (30, 32) and an in-line structure (20) that are positioned facing the undersea foundation (14);
**characterized in that** the installation (10) includes at least one guide (21) mounted on the foundation (14) on either side of the section of pipe (30, 32) to laterally block the section of pipe (30, 32) with respect to the foundation (14), while authorizing a longitudinal movement of the section of pipe (30, 32) with respect to the guide (21), the guide (21) being able to be placed after the placement of the section of pipe (30, 32) on the foundation (14).

11. The installation (10) according to claim 10, wherein the guide (21) includes a first lateral stop (52) positioned on one side of the section of pipe (30, 32) and a second lateral stop (54) positioned on a second side of the section of pipe (30, 32), the section of pipe (30, 32) being laterally clamped between the first lateral stop (52) and the second lateral stop (54).

12. The installation (10) according to claim 11, wherein the guide (21) includes at least one intermediate stop (56) clamped between the first lateral stop (52) and the second lateral stop (54), on an upper bearing surface connected to the section of pipe (30, 32).

13. The installation (10) according to claim 12, the section of pipe (30, 32) has a protective cap, advantageously cylindrical, the intermediate stop (56) being clamped on the cap.

14. The installation (10) according to any one of claims 11 to 13, wherein the guide (21) includes a support (50) mounted on the foundation (14), each lateral stop (52, 54) being movable vertically in the support (50) between an upper placement position of the section of pipe (30, 32) and a lower clamping position of the section of pipe (30, 32).

15. The installation (10) according to any one of claims 10 to 14, wherein the in-line structure (20) bears on the foundation (14).
